# EUROPÄISCHE PATENTANMELDUNG

(11) **EP 1 637 296 A1**
(43) Veröffentlichungstag der Anmeldung: **22.03.2006**
(21) Anmeldenummer: 05019977.7
(22) Anmeldetag: 14.09.2005
(51) Int. Cl.: B26D 7/30

(54) **Aufschneidevorrichtung mit Wiegeeinheit**

(30) Priorität: 15.09.2004 DE 102004044665
(71) Anmelder: ritterwerk GmbH, 82194 Gröbenzell (DE)
(72) Erfinder: Lapper, Thomas, 82290 Landsberied (DE)
(74) Vertreter: HOFFMANN EITLE

(57) **Zusammenfassung**

In eine Aufschneidevorrichtung ist eine Wiegeeinheit (20) zum Abwiegen des Aufschnitts integriert. Die Wiegeeinheit (20) ist an der Aufschneidevorrichtung (1) zwischen einer Aufbewahrstellung und einer Gebrauchsstellung beweglich gelagert.

## Beschreibung

### Technisches Gebiet

Die vorliegende Erfindung betrifft eine Aufschneidevorrichtung - insbesondere zum Aufschneiden von Nahrungsmitteln -, in die eine Wiegeeinheit zum Abwiegen des Aufschnitts integriert ist, gemäß dem Oberbegriff des Anspruchs 1.

### Stand der Technik

Eine Aufschneidevorrichtung mit einer Wiegeeinheit, die unmittelbar nach dem Aufschneiden das Gewicht des Aufschnitts anzeigt, ist beispielsweise in DE 37 13 464 A1 offenbart.

DE 298 04 979 U1 und DE 38 36 859 A1 beschreiben ebenfalls Vorrichtungen zum Aufschneiden von Nahrungsmitteln mit einer Wiegeeinheit.

DE-GM 80 22 565.6 beschreibt eine Aufschnittschneidemaschine, die mit einer Waage zusammengebracht werden kann. Die Waage wird mit ihrem seitlich weit überstehenden Fuß derart unter den Sockel einer Aufschnittschneidemaschine geschoben, dass die Lastplatte freitragend über der Ablegestelle einer zu portionierenden Aufschnittware liegt. Somit ist die Waage der Aufschnittschneidemaschine als externe Einrichtung beizustellen.

### Darstellung der Erfindung

Die Aufgabe der vorliegenden Erfindung ist es, eine Aufschneidevorrichtung mit einer Wiegeeinheit bereitzustellen, die einfach und sicher bedient und transportiert sowie platzsparend aufbewahrt werden kann.

Die genannte Aufgabe wird gemäß der vorliegenden Erfindung durch eine Aufschneidevorrichtung mit den Merkmalen des Anspruchs 1 gelöst.

Demzufolge wird eine Aufschneidevorrichtung geschaffen, an der eine Wiegeeinheit zum Abwiegen des Aufschnitts zwischen einer Aufbewahrstellung und einer Gebrauchsstellung beweglich gelagert ist.

Die Wiegeeinheit ist mit der Aufschneidevorrichtung so verbunden, dass die gesamte Anordnung einfach und sicher bedient und transportiert sowie platzsparend aufbewahrt werden kann.

Vorteilhafte Weiterbildungen der Erfindung sind in den abhängigen Ansprüchen angegeben.

Gemäß einer vorteilhaften Weiterbildung der Erfindung ist die Wiegeeinheit in der Aufbewahrstellung unterhalb einer an der Aufschneidevorrichtung vorgesehenen Auflagefläche für Nahrungsmittel angeordnet.

In der Gebrauchsstellung ist die Wiegeeinheit vorzugsweise in bezug auf eine zur Auflagefläche im wesentlichen senkrecht angeordnete Schneideinheit von der Auflagefläche diametral abgewandt, wobei sich die Schneideinheit oberhalb der Wiegeeinheit befindet. Hierdurch kann der Aufschnitt unmittelbar nach dem durch die Schneideinheit erfolgenden Aufschneiden auf die Wiegeeinheit fallen und auf dieser gewogen werden.

Vorzugsweise weist die Aufschneidevorrichtung zumindest einen Standfuß auf. Die Wiegeeinheit kann dann in der Aufbewahrstellung zwischen zwei Standfüßen angeordnet sein.

Gemäß einer weiteren vorteilhaften Ausgestaltung der Erfindung ist die Wiegeeinheit in der Aufbewahrstellung arretierbar. Dies ermöglicht einen einfachen Transport der Aufschneidevorrichtung, ohne dass die Gefahr besteht, dass die Wiegeeinheit sich beim Transport von der Aufschneidevorrichtung löst.

Dabei kann die Arretierung durch Anheben der Wiegeeinheit aufhebbar sein. Die Wiegeeinheit kann dann nach Aufheben der Arretierung aus der Aufbewahrstellung durch seitliches Ausziehen in die Gebrauchsstellung gebracht werden, ohne dass sich der Bediener an einer ebenfalls an der Aufschneidevorrichtung angeordneten Schneideinheit verletzt.

Vorzugsweise hat die Aufschneidevorrichtung zum beweglichen Lagern der Wiegeeinheit mindestens eine Gleitführung. Diese kann beispielsweise an mindestens einem der Standfüße und/oder an der Auflagefläche vorhanden sein.

Die Gleitführungen ermöglichen eine definierte, einfache Bewegung der Wiegeeinheit zwischen Aufbewahrstellung und Gebrauchsstellung.

Gemäß einer vorteilhaften Weiterbildung der Erfindung ist die Wiegeeinheit flach ausgestaltet. Hierdurch kann sie unterhalb des Auflagetisches in die Aufbewahrstellung gebracht werden, wobei die Standfüße niedrig ausgestaltet sein können. So wird die Bauhöhe der Anordnung gering gehalten.

Die Wiegeeinheit kann eine elektronische Wiegeeinheit sein, ebenso denkbar ist aber auch eine mechanische Wiegeeinheit.

Im Falle einer elektronischen Wiegeeinheit kann die Energieversorgung über eine eingebaute Energiequelle wie beispielsweise eine Batterie erfolgen. Hierdurch kann die Wiegeeinheit unabhängig von der Aufschneidevorrichtung oder unabhängig von einem Stromnetz mit Energie versorgt werden.

Gemäß einer vorteilhaften Weiterbildung der Erfindung kann die Wiegeeinheit vollständig von der Aufschneidevorrichtung getrennt werden. Dann kann die Wiegeeinheit auch separat, also von der Aufschneidevorrichtung losgelöst, nutzbar sein. Dies wird durch eine eingebaute Energiequelle erleichtert. Somit kann sich die Wiegeeinheit neben einer Aufbewahrstellung und einer Gebrauchsstellung auch in einer separaten Stellung befinden.

Vorzugsweise weist die Wiegeeinheit eine Zugwiegeeinheit auf, die das Erreichen eines einstellbaren Gewichts optisch und/oder akustisch signalisiert. So kann eine gewünschte Aufschnittmenge einfach und schnell zugewogen werden.

Die Wiegeeinheit weist vorzugsweise eine Wiegeplattform auf, die aus Glas, Metall oder Kunststoff gebildet ist. Die Wiegeplattform kann auch aus mehreren der genannten Materialien in verschiedenen Anteilen besteht.

Gemäß einer vorteilhaften Weiterbildung der Erfindung ist die Wiegplattform von der restlichen Wiegeeinheit einfach, das heißt ohne Zuhilfenahme von Werkzeug, abnehmbar und an dieser einfach wieder anbringbar. Somit kann die Wiegeplattform als Servierschale benutzt und einfach gereinigt werden.

Weitere Vorteile und Einzelheiten der Erfindung ergeben sich aus der nachfolgenden Beschreibung bevorzugter Ausführungsbeispiele anhand der Zeichnungen.

### Kurze Beschreibung der Zeichnungen

- Fig. 1: zeigt eine perspektivische Ansicht einer bevorzugten Ausführungsform einer erfindungsgemäßen Aufschneidevorrichtung, bei der sich die Wiegeeinheit in der Aufbewahrstellung befindet,
- Fig. 2: zeigt eine Seitenansicht der bevorzugten Ausführungsform, bei der sich die Wiegeeinheit in der Aufbewahrstellung befindet,
- Fig. 3: zeigt eine Querschnitts-Ansicht entsprechend der in Fig. 2 gezeigten Schnittlinie A-A,
- Fig. 3A: zeigt eine Detailansicht von Fig. 3, die ein Arretiersystem der bevorzugten Ausführungsform darstellt,
- Fig. 4: zeigt eine Vorderansicht der bevorzugten Ausführungsform, bei der sich die Wiegeeinheit in der Aufbewahrstellung befindet,
- Fig. 4A: zeigt den unteren Teil einer Querschnitts-Ansicht entsprechend der in Fig. 4 gezeigten Schnittlinie B-B,
- Fig. 4B: zeigt ein Detail der Fig. 4A, das einen Bereich um eine vordere Gleitschiene darstellt,
- Fig. 4C: zeigt ein Detail der Fig. 4A, das einen Bereich um eine hintere Gleitschiene darstellt,
- Fig. 5: zeigt eine perspektivische Ansicht der bevorzugten Ausführungsform, bei der sich die Wiegeeinheit in der Gebrauchsstellung befindet, und
- Fig. 6: zeigt eine Vorderansicht der bevorzugten Ausführungsform, bei der sich die Wiegeeinheit in der Gebrauchsstellung befindet.

### Ausführliche Beschreibung der bevorzugten Ausführungsform

Eine bevorzugte Ausführungsform einer Aufschneidevorrichtung gemäß der vorliegenden Erfindung wird nun ausführlich unter Bezugnahme auf die begleitenden Zeichnungen beschrieben.

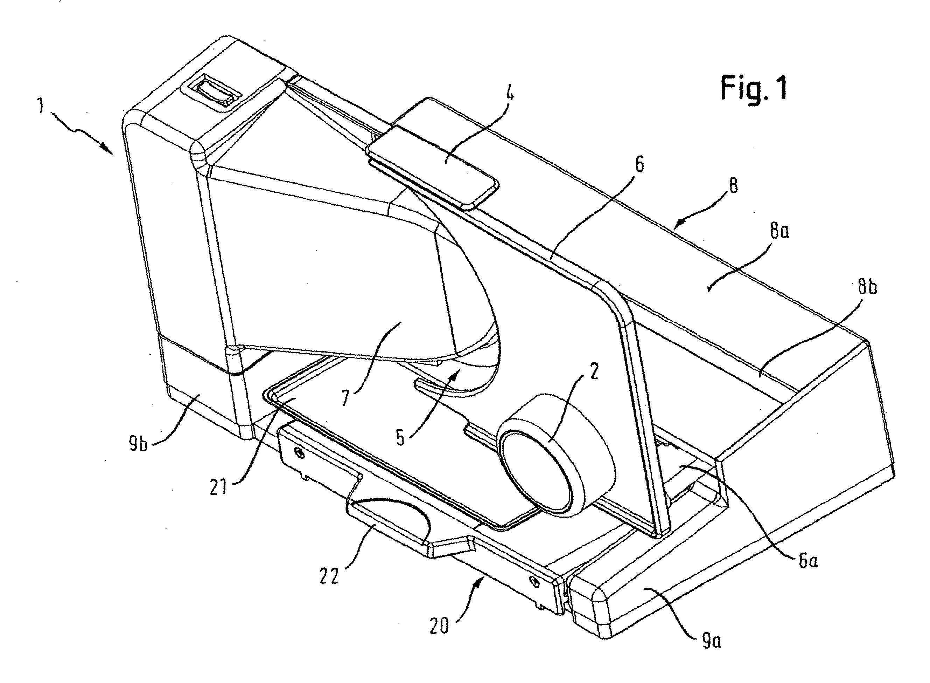

In Fig. 1 ist eine Aufschneidevorrichtung 1 in perspektivischer Ansicht dargestellt, an der erfindungsgemäß eine Wiegeeinheit 20 beweglich gelagert ist.

In der dargestellten Ausführungsform ist die Wiegeeinheit 20 in der Aufbewahrstellung unterhalb eines Auflagetisches 8 der Aufschneidevorrichtung 1 zwischen einem vorderen Standfuß 9a und einem hinteren Standfuß 9b angeordnet. Die Standfüße 9a, 9b erstrecken sich jeweils an einem in Längsrichtung gesehenen Ende der Aufschneidevorrichtung 1 über deren gesamte Breite.

Die Standfüße können auch auf andere Art ausgeführt werden. So sind ein einziger, zum Beispiel ringförmiger, Standfuß mit einer Öffnung für das Bewegen der Wiegeeinheit 20 in die Aufbewahrstellung unterhalb des Auflagetisches 8, oder mehrere einzelne kleine Standfüße denkbar. Generell ist anstelle der Standfüße jede Vorrichtung verwendbar, die einen Abstand zwischen der Vorrichtung 1 und der Standfläche der Anordnung gewährleistet, sodass die Wiegeeinheit 20 unterhalb des Auflagetisches 8 aufbewahrbar ist.

Die Aufbewahrstellung ist nicht auf die in den Zeichnungen dargestellte beschränkt. Auch das Aufbewahren der Wiegeeinheit 20 unter einer Auflagefläche 8a für Nahrungsmittel in dem Auflagetisch 8 ist beispielsweise möglich. Die Wiegeeinheit 20 könnte in der Aufbewahrstellung auch vertikal an einer Seite der Aufschneidevorrichtung 1 vorgesehen sein.

Die Auflagefläche 8a weist in Längsrichtung der Aufschneidevorrichtung 1 gemäß der bevorzugten Ausführungsform eine Führungsnut 8b auf, in der ein Führungstisch hin und her beweglich geführt ist. Der Führungstisch kann statt der Auflagefläche 8a zur Auflage der aufzuschneidenden Nahrungsmittel dienen und das Aufschneiden sicherer und bequemer gestalten. Das Prinzip eines solchen Führungstisches ist aus dem Stand der Technik bekannt.

Zudem ist an der Aufschneidevorrichtung 1 eine Schneideinheit 5 über eine Halterung 7 angebracht. Gemäß der bevorzugten Ausführungsform der Erfindung hat die Schneideinheit 5 eine kreisförmige Messerscheibe, die gegenüber der Auflagefläche 8a im wesentlichen senkrecht angeordnet ist. Die Messerscheibe ist an der Halterung 7 drehbar gelagert.

Eine Anlagefläche 6 zum Einstellen der Dicke des Aufschnitts kann mit Hilfe eines Drehknopfes 2 seitlich stufenlos hin und her bewegt werden. Die Anlagefläche 6 ist durch eine an ihrem unteren Ende senkrecht angebrachte Verbindungseinheit 6a beweglich mit dem Auflagetisch 8 verbunden.

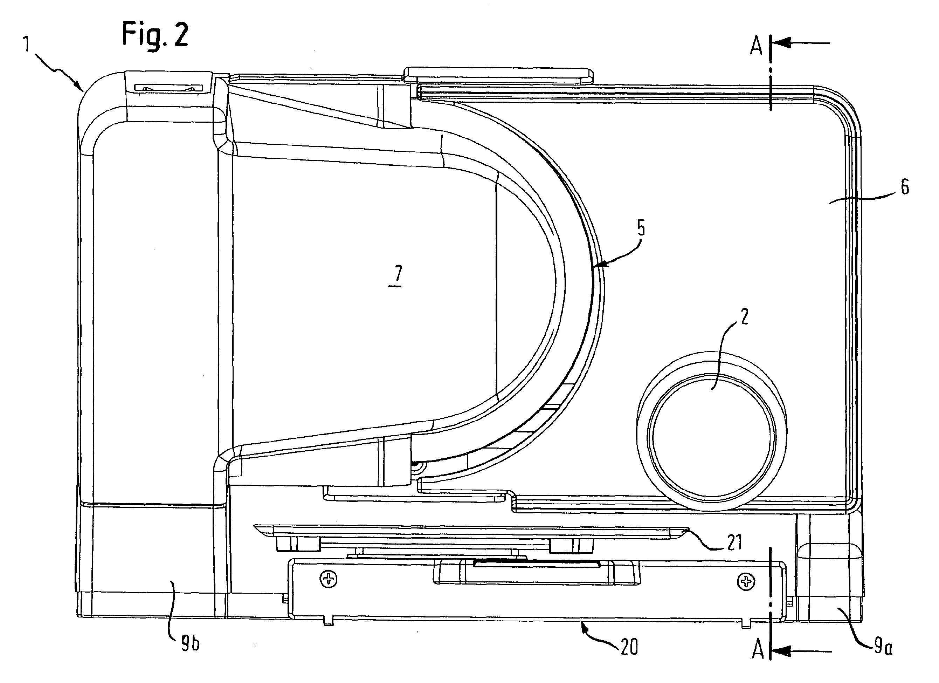

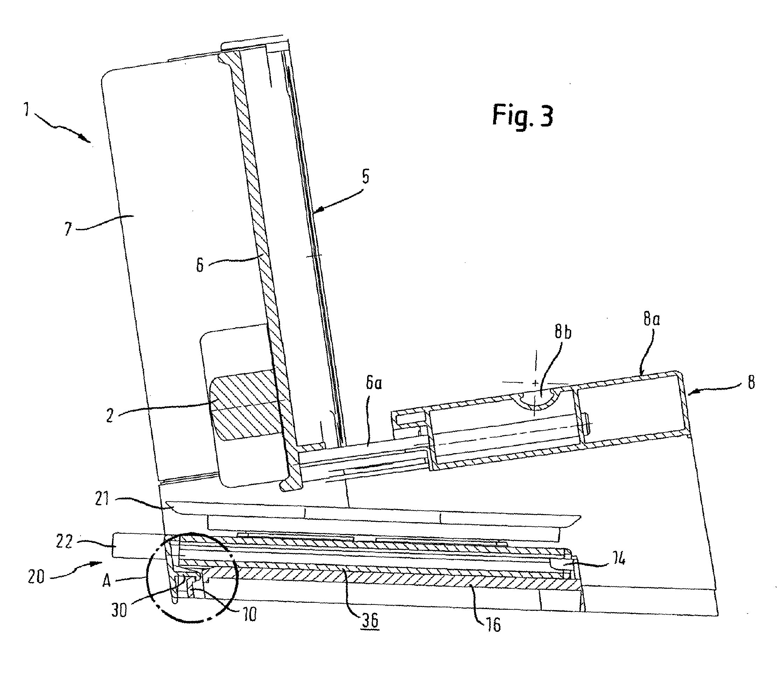

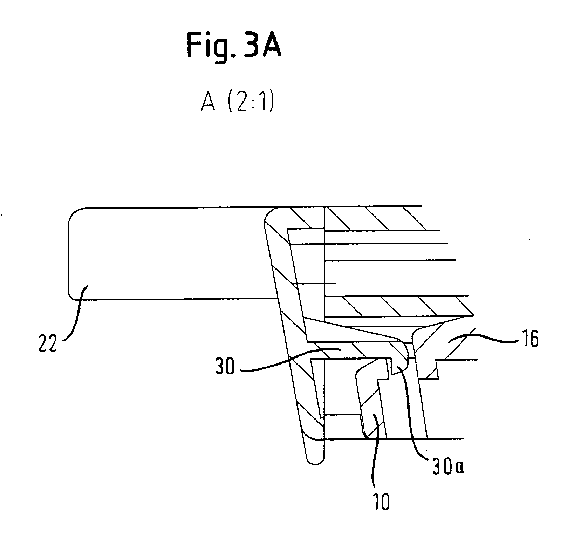

Fig. 3 zeigt eine Querschnittsansicht entsprechend der in Fig. 2 gezeigten Schnittlinie A-A und zeigt unter anderem die Aufnahme der Verbindungseinheit 6a in dem Auflagetisch 8. Weiterhin sind eine vordere Gleitschiene 16, die Teil der Aufschneidevorrichtung 1 ist, und ein vorderes Gleitelement 36, das Teil der Wiegeeinheit 20 ist, gezeigt. Der mit "A" gekennzeichnete, vordere Bereich der Wiegeeinheit 20, der eine bevorzugte Ausführungsform einer Arretierung darstellt, ist in Fig. 3A als Detail gezeigt.

Der in Fig. 3A gezeigte Arretiermechanismus weist ein zur Aufschneidevorrichtung 1 gehöriges Rückhalteelement 10 auf, das fest an dem vorderen Standfuß 9a (hier nicht gezeigt) befestigt ist und sich von dem vorderen Standfuß 9a so weit in Längsrichtung hin zu dem hinteren Standfuß 9b (hier nicht gezeigt) erstreckt, dass es mit einer zur Wiegeeinheit 20 gehörigen Rastzunge 30 im Eingriff ist. Die Rastzunge 30 weist an ihrem nach rechts weisenden Ende einen nach unten hervorstehenden Rastzungenkopf 30a auf, der gegen das Rückhalteelement 10 anschlägt, wenn eine Kraftkomponente auf die Wiegeeinheit 20 (nach links in der Zeichnung) wirkt. Hierdurch wird die Wiegeeinheit 20 an einer Bewegung in dieser Richtung gehindert, d.h. die Wiegeeinheit ist in der Aufbewahrstellung arretiert.

Die Rastzunge 30 ist integraler Bestandteil der Wiegeeinheit 20. Auch andere Verbindungsformen der Rastzunge 30 mit der Wiegeeinheit 20 wie z.B. durch Clips, Klebstoff oder Schrauben sind möglich.

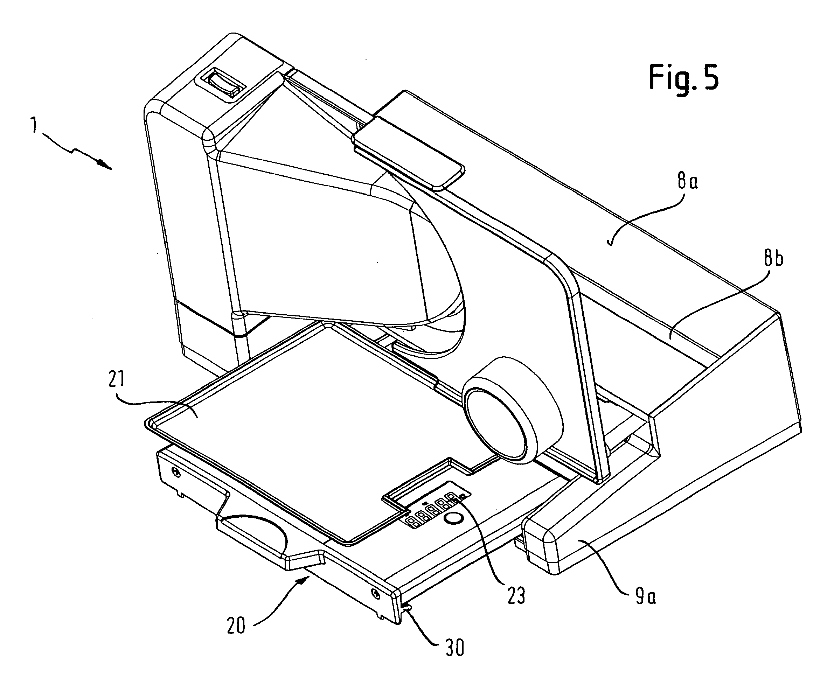

Soll die Wiegeeinheit 20 aus der Aufbewahrstellung nach links bewegt werden, muss die Arretierung aufgehoben werden. Hierzu wird in dieser Ausführungsform die Wiegeeinheit 20 angehoben, was mit Hilfe eines Griffes 22 durchgeführt werden kann, und anschließend zur Seite (nach links in der Zeichnung) gezogen, was ebenso mit Hilfe des Griffes 22 erfolgen kann. Die Wiegeeinheit 20 kann seitlich so weit ausgezogen werden, bis sie sich in der Gebrauchsstellung befindet, wie sie in Fig. 5 dargestellt ist.

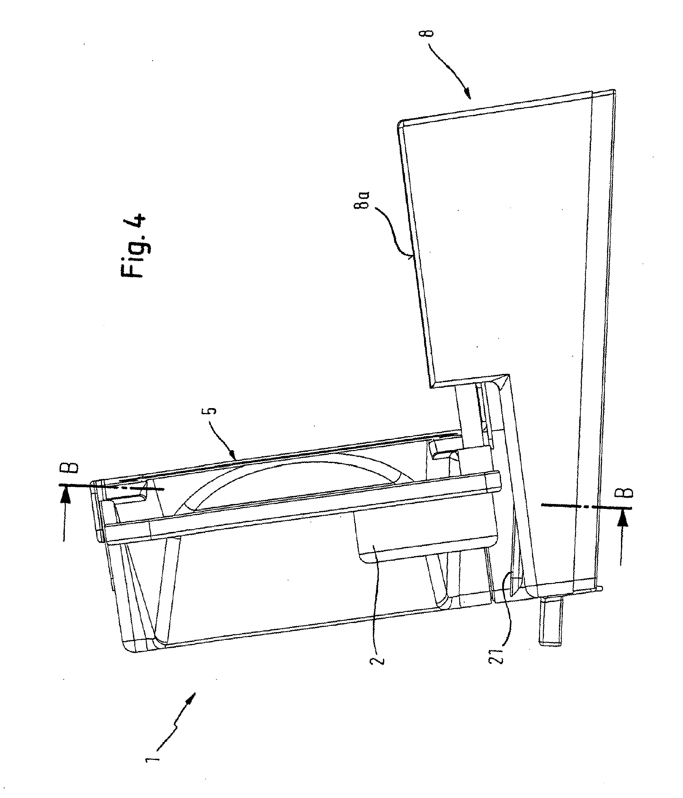

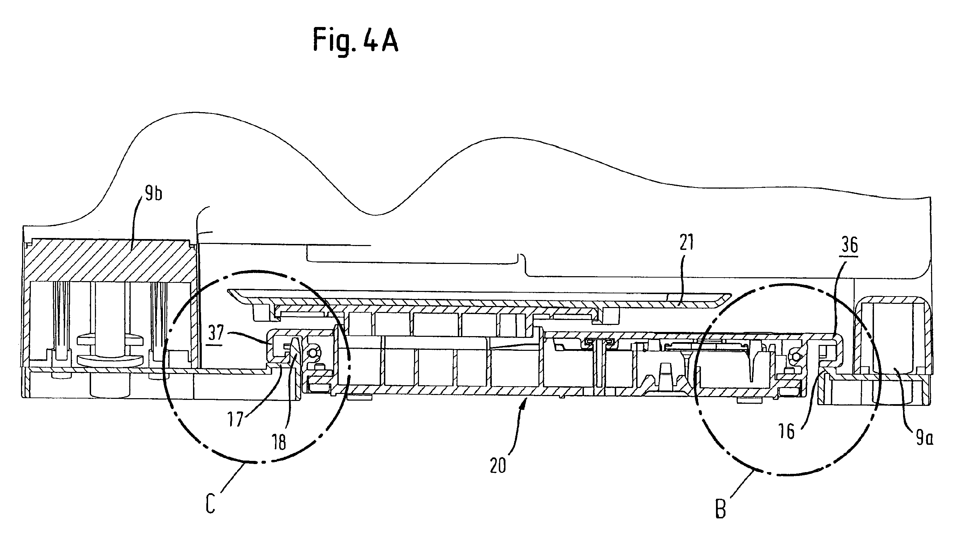

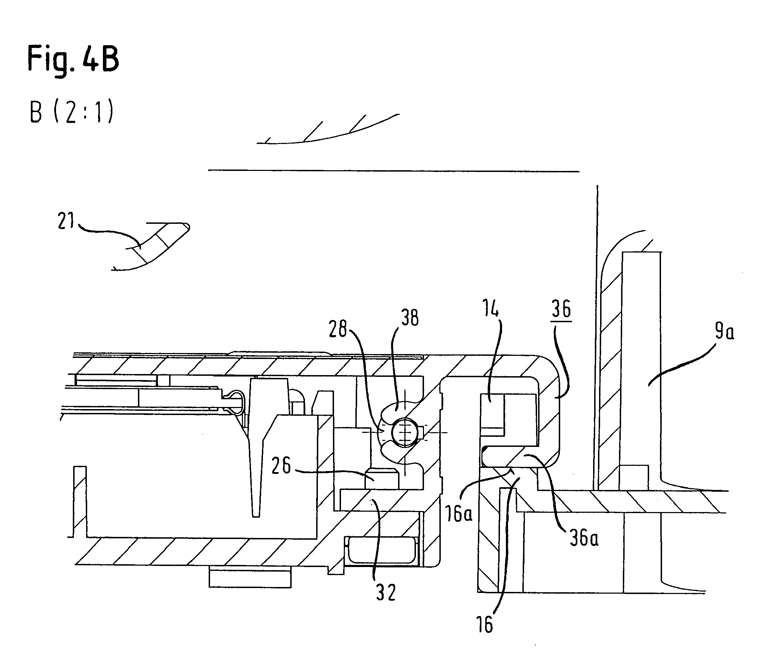

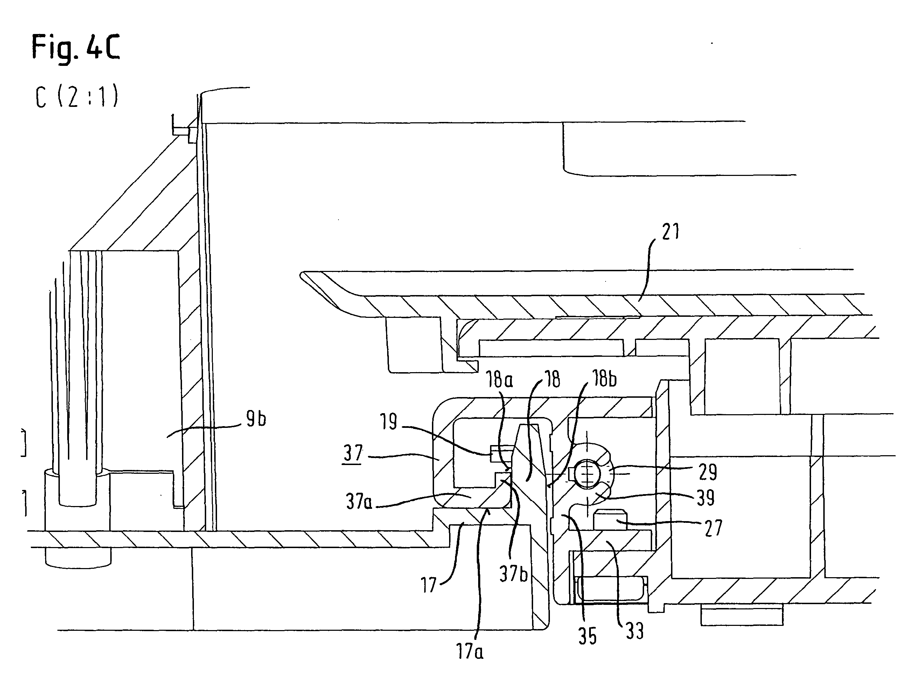

Um die Wiegeeinheit 20 nach dem Aufheben der Arretierung in die Gebrauchsstellung zu bringen, dient das in den Figuren 4B und 4C im Detail dargestellte Gleitsystem. Diese Figuren zeigen Details der in Fig. 4A gezeigten Querschnitts-Ansicht.

Gemäß der bevorzugten Ausführungsform sind, wie in Fig. 4A gezeigt, zwei Gleitführungen vorhanden, die als Gleitschienen 16, 17 an jeweils einem der beiden Standfüße 9a, 9b vorhanden sind. Die Gleitschienen sind so ausgelegt, dass sie die Wiegeeinheit beim Bewegen von der Aufbewahrstellung in die Gebrauchsstellung oder umgekehrt möglichst spielfrei führen, wobei gleichzeitig ein Verklemmen der Wiegeeinheit mit der Vorrichtung zum Aufschneiden verhindert wird.

Wie in Fig. 4B zu erkennen, ist ein vorderes Gleitelement 36, das Bestandteil der Wiegeeinheit 20 ist, unter anderem mit Hilfe zweier vorderer Befestigungselemente an der Wiegeeinheit 20 befestigt. Ein erstes vorderes Befestigungselement 28 ist mit einer vorderen Aufnahme 38 verbunden, und ein zweites vorderes Befestigungselement 26 ist mit einem vorderen Steg 32 verbunden, wobei sowohl die vordere Aufnahme 38 als auch der vordere Steg 32 Teil des vorderen Gleitelements 36 sind.

Das vordere Gleitelement 36 weist zudem ein vorderes Horizontalelement 36a auf, dessen untere Horizontalfläche sich vertikal auf der Horizontalfläche 16a der vorderen Gleitschiene 16 gleitbar abstützt.

Wie in Fig. 4C zu erkennen ist, ist ein hinteres Gleitelement 37, das ebenfalls Bestandteil der Wiegeeinheit 20 ist, an dieser, ähnlich dem vorderen Gleitelement 36, unter anderem mit Hilfe zweier hinterer Befestigungselemente befestigt. Ein erstes hinteres Befestigungselement 29 ist mit einer hinteren Aufnahme 39 verbunden, und ein zweites hinteres Befestigungselement 27 ist mit einem hinteren Steg 33 verbunden, wobei sowohl die hinteren Aufnahme 39 als auch der hintere Steg 33 Teil des hinteren Gleitelements 37 sind. Genauer gesagt weist das hintere Gleitelement 37 ein Vertikalelement 35 auf, an dem die hintere Aufnahme 39 und der hintere Steg 33 vorhanden sind. Auf die Anordnung des Vertikalelements 35 wird weiter unten genauer eingegangen.

Das hintere Gleitelement 37 weist zudem ein hinteres Horizontalelement 37a auf, dessen untere Horizontalfläche sich vertikal auf der Horizontalfläche 17a der hinteren Gleitschiene gleitbar abstützt.

An dem vorderen Ende des hinteren Horizontalelements 37a ist ein hinteres Vertikalelement 37b vorhanden, das an eine hintere Vertikalfläche 18a eines Vertikalelements 18 der hinteren Gleitschiene 17 angrenzt. Das oben erwähnte Vertikalelement 35 befindet sich auf der anderen Seite des Vertikalelements 18, so dass es an dessen vordere Vertikalfläche 18b angrenzt. Der Abstand der hinteren Fläche des Vertikalelements 35 von der vorderen Fläche des hinteren Vertikalelements 37b abzüglich der Dicke des Vertikalelements 18 in Längenrichtung definiert das Spiel in Längsrichtung. Dieses Spiel sollte möglichst gering sein, wobei aber sichergestellt bleibt, dass die Wiegeeinheit 20 sich nicht an der Aufschneidevorrichtung 1 verklemmt.

Oberhalb des hinteren Vertikalelements 37b ist an dem Vertikalelement 18 der hinteren Gleitschiene ein Begrenzungselement 19 vorhanden, das zwar eine (unabsichtliche) Aufwärtsbewegung der Wiegeeinheit 20 relativ zu der Aufschneidevorrichtung 1 verhindert, jedoch genug Spiel gewährleistet, dass ein Anheben der Wiegeeinheit in dem Maß ermöglicht wird, wie es zum Aufheben der Arretierung nötig ist. Auch andere Ausführungsformen, die eine (unabsichtliche) Aufwärtsbewegung der Wiegeeinheit 20 relativ zu der Aufschneidevorrichtung 1 verhindern, wie z.B. das Befestigen eines Begrenzungselements an der vorderen Gleitschiene 16, sind möglich.

Gemäß der in den Figuren 4A, 4B und 4C gezeigten vorteilhaften Ausgestaltung gleitet die Wiegeeinheit 20 somit auf den Horizontalflächen 16a, 17a der vorderen Gleitschiene 16 und der hinteren Gleitschiene 17.

Die Gleitführungen können erfindungsgemäß beispielsweise auch mit einer Schwalbenschwanz-Verbindung ausgeführt sein. Jede Gleitführung kann beispielsweise nur an der Auflagefläche 8a, nur an einem Standfuß, an mehreren Standfüßen oder sowohl an der Auflagefläche 8a als auch an einem oder mehreren Standfüßen befestigt sein. Natürlich ist auch eine Befestigung der Gleitführungen an jedem anderen Bauteil der Aufschneidevorrichtung möglich. Auch andere Gleitsysteme, die z.B. Rollen oder Magnete aufweisen, sind verwendbar.

Die Gebrauchsstellung kann nicht nur in Längsrichtung, sondern auch in seitlicher Richtung der Aufschneidevorrichtung definiert sein, indem zum Beispiel ein Anschlagpunkt vorhanden ist, der das seitliche Herausziehen der Wiegeeinheit 20 begrenzt. Hierzu kann zum Beispiel an der vorderen Gleitschiene 16 links eine in Längsrichtung vorstehende Nase vorhanden sein, an der eine entsprechend an dem vorderen Gleitelement 36 der Wiegeeinheit angebrachte Nase anschlägt, wenn die definierte Gebrauchsstellung erreicht ist.

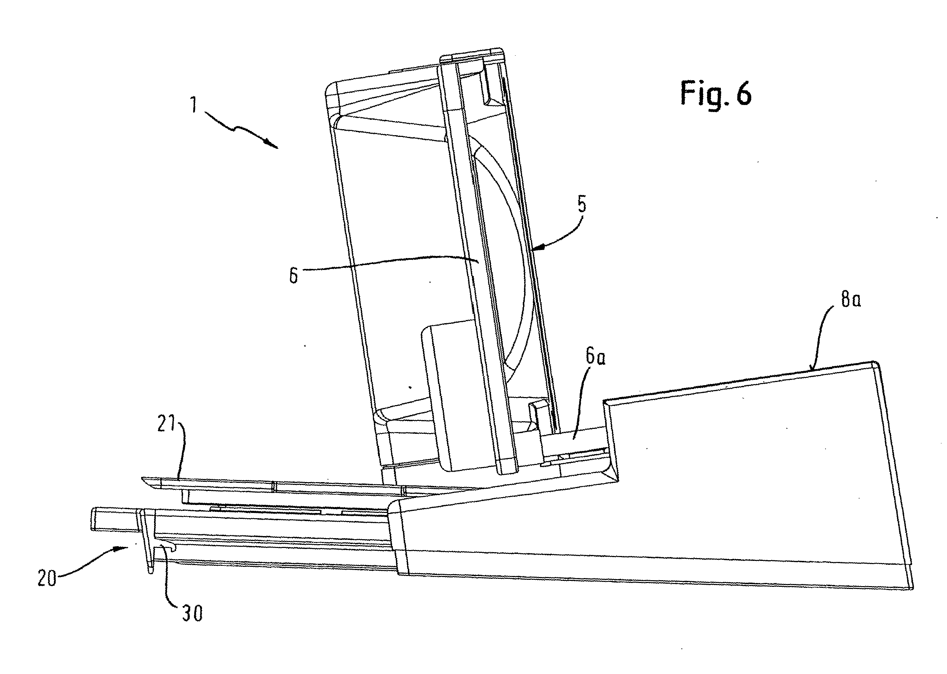

Die Aufschneidevorrichtung 1 ist in Fig. 5 als perspektivische Ansicht und in Fig. 6 in Vorderansicht in der Gebrauchsstellung dargestellt. Fig. 5 zeigt auch eine Ausführungsform einer Wiegeplattform 21 und eine Anordnungsmöglichkeit einer Anzeigeeinheit 23 an der Wiegeeinheit 20.

Auch andere Anordnungen der Anzeigeeinheit 23 z.B. an der Vorrichtung 1 oder völlig separat sind möglich.

In der Gebrauchsstellung lässt sich die Wiegeeinheit 20 vollständig von der Aufschneidevorrichtung 1 abnehmen. Dieses Abnehmen der Wiegeeinheit 20 von der Aufschneidevorrichtung 1 ist einfach durchführbar, indem die Wiegeeinheit seitlich so weit herausgezogen wird, bis die Gleitführungen nicht mehr im Eingriff sind. Sollte ein Anschlag zur Begrenzung des Herausziehens der Wiegeeinheit vorhanden sein, so muss dieser so gestaltet sein, dass die Wiegeeinheit durch erneutes Anheben oder durch verstärktes Ziehen (z.B. Druckpunkt durch federnde Nase) ganz aus den Führungen herausgezogen werden kann. Das Einschieben der Wiegeeinheit wird durch Einführschrägen an den Führungen erleichtert.

Dabei kann die Aufschneidevorrichtung 1 so ausgestaltet sein, dass verschiedene Wiegeeinheiten daran beweglich lagerbar sind. Eine Wiegeeinheit kann so einfach gegen eine andere ausgetauscht werden, beispielsweise zur Wartung oder Reparatur.

Schließlich ist die Wiegeplattform 21 in der dargestellten Ausführungsform einfach durch seitliches Herausziehen von der Wiegeeinheit 20 abnehmbar. Die Wiegeplattform 21 kann dann direkt als Servierschale verwendet werden. Außerdem ermöglicht diese Anordnung eine optimale Reinigung der Wiegeplattform 21, ohne dass die komplette Wiegeeinheit 20 von der Aufschneidevorrichtung 1 abgenommen werden müsste.

### Bezugszeichen-Liste

- 1: Aufschneidevorrichtung
- 2: Drehknopf
- 5: Schneideinheit
- 6: Anlagefläche
- 6a: Verbindungseinheit
- 7: Halterung
- 8: Auflagetisch
- 8a: Auflagefläche
- 8b: Führungsnut
- 9a: vorderer Standfuß
- 9b: hinterer Standfuß
- 10: Rückhalteelement
- 14: Vorsprung
- 16: vordere Gleitschiene
- 16a: Horizontalfläche der vorderen Gleitschiene
- 17: hintere Gleitschiene
- 17a: Horizontalfläche der hinteren Gleitschiene
- 18: Vertikalelement der hinteren Gleitschiene
- 18a: hintere Vertikalfläche
- 18b: vordere Vertikalfläche
- 19: Begrenzungselement
- 20: Wiegeeinheit
- 21: Wiegeplattform
- 22: Griff
- 23: Anzeigeeinheit
- 26: zweites vorderes Befestigungselement
- 27: zweites hinteres Befestigungselement
- 28: erstes vorderes Befestigungselement
- 29: erstes hinteres Befestigungselement
- 30: Rastzunge
- 30a: Rastzungen-Kopf
- 32: vorderer Steg
- 33: hinterer Steg
- 35: Vertikalelement
- 36: vorderes Gleitelement
- 36a: vorderes Horizontalelement
- 37: hinteres Gleitelement
- 37a: hinteres Horizontalelement
- 37b: hinteres Vertikalelement
- 38: vordere Aufnahme
- 39: hintere Aufnahme

## Patentansprüche

1. Aufschneidevorrichtung, in die eine Wiegeeinheit (20) zum Abwiegen des Aufschnitts integriert ist, **dadurch gekennzeichnet, dass** die Wiegeeinheit (20) an der Aufschneidevorrichtung (1) zwischen einer Aufbewahrstellung und einer Gebrauchsstellung beweglich gelagert ist.

2. Aufschneidevorrichtung nach Anspruch 1, bei der die Wiegeeinheit (20) in der Aufbewahrstellung unterhalb einer an der Aufschneidevorrichtung (1) vorgesehenen Auflagefläche (8a) für Nahrungsmittel positioniert ist.

3. Aufschneidevorrichtung nach Anspruch 1,bei der die Wiegeeinheit (20) in bezug auf eine zur Auflagefläche (8a) im wesentlichen senkrecht angeordnete Schneideinheit (5) von der Auflagefläche (8a) diametral abgewandt ist, wobei sich die Schneideinheit (5) oberhalb der Wiegeeinheit (20) befindet.

4. Aufschneidevorrichtung nach Anspruch 1, 2 oder 3 mit zumindest einem Standfuß (9a, 9b).

5. Aufschneidevorrichtung nach Anspruch 4, bei der die Wiegeeinheit (20) in der Aufbewahrstellung zwischen zwei Standfüßen (9a, 9b) angeordnet ist.

6. Aufschneidevorrichtung nach einem der vorangehenden Ansprüche, bei der die Wiegeeinheit (20) in der Aufbewahrstellung arretierbar ist.

7. Aufschneidevorrichtung nach Anspruch 6, bei der die Arretierung der Wiegeeinheit (20) durch Anheben der Wiegeeinheit (20) aufhebbar ist.

8. Aufschneidevorrichtung nach einem der Ansprüche 1 bis 6, bei der zum beweglichen Lagern der Wiegeeinheit (20) mindestens eine Gleitführung vorhanden ist.

9. Aufschneidevorrichtung nach Anspruch 7, bei der die mindestens eine Gleitführung an mindestens einem Standfuß (9a, 9b) der Aufschneidevorrichtung (1) vorgesehen ist.

10. Aufschneidevorrichtung nach einem der Ansprüche 8 und 9, bei der die mindestens eine Gleitführung an einer Auflagefläche (8a) der Aufschneidevorrichtung (1) vorgesehen ist.

11. Aufschneidevorrichtung nach einem der vorangehenden Ansprüche, bei der die Wiegeeinheit (20) flach ausgestaltet ist.

12. Aufschneidevorrichtung nach einem der vorangehenden Ansprüche, bei der die Wiegeeinheit (20) eine elektronische Wiegeeinheit (20) ist.

13. Aufschneidevorrichtung nach Anspruch 12, bei der die Wiegeeinheit (20) zur Energieversorgung eine eingebaute Energiequelle aufweist.

14. Aufschneidevorrichtung nach einem der vorangehenden Ansprüche, bei der die Wiegeeinheit (20) vollständig von der Aufschneidevorrichtung (1) getrennt werden kann.

15. Aufschneidevorrichtung nach Anspruch 14, bei der die Wiegeeinheit (20) auch separat nutzbar ist.

16. Aufschneidevorrichtung nach einem der vorangehenden Ansprüche, bei der die Wiegeeinheit (20) eine Zuwiege-Einheit aufweist, die das Erreichen eines einstellbaren Gewichts signalisiert.

17. Aufschneidevorrichtung nach einem der vorangehenden Ansprüche, bei der die Wiegeeinheit (20) eine Wiegeplattform (21) aufweist, die aus Glas, Metall oder Kunststoff gebildet ist.

18. Aufschneidevorrichtung nach einem der vorangehenden Ansprüche, bei der die Wiegeplattform (21) von der restlichen Wiegeeinheit (20) abnehmbar ist.
